# EUROPÄISCHE PATENTSCHRIFT

(11) **EP 1 136 339 B1**
(45) Veröffentlichungstag und Bekanntmachung des Hinweises auf die Patenterteilung: **12.11.2003**
(21) Anmeldenummer: 01105922.7
(22) Anmeldetag: 09.03.2001
(51) Int. Cl.: B61D 45/00, B60P 7/135

(54) **Seitliche Ladegutsicherung für Schienenfahrzeuge**
Lateral load securing device for railway vehicles
Dispositif de fixation latéral d' une charge pour véhicules ferroviaire

(30) Priorität: 18.03.2000 DE 10013643
(43) Veröffentlichungstag der Anmeldung: 26.09.2001
(73) Patentinhaber: ALSTOM LHB GmbH, 38239 Salzgitter (DE)
(72) Erfinder: Beier, Günter, Dipl.-Ing., 38259 Salzgitter (DE); Brockfeld, Markus, Dipl.-Ing., 38126 Braunschweig (DE)

(56) Entgegenhaltungen:
- EP-A- 0 856 450
- US-A- 3 906 870
- US-A- 4 349 302
- US-A- 5 842 821

## Beschreibung

Die Erfindung betrifft eine seitliche Ladegutsicherung für Transportfahrzeuge, insbesondere für Eisenbahngüterwagen.

In den letzten Jahren haben die Anforderungen an Transportfahrzeuge, insbesondere Eisenbahngüterwagen, einen ausreichenden Schutz gegen Querverlogerungen von Ladegütern zu gewährleisten, ständig zugenommen. Es soll verhindert werden, daß die Ladung seitlich verrutscht und sich z.B. bei Schiebewandwagen gegen die Wände legt und diese aus dem Profil drückt. Bei anderen Wagen, z.B. Flachwagen oder Wagen mit Planenverdeck, sollen durch ein effektives Ladungssicherungssystem nicht nur betriebsgefährdende Zustände ausgeschlossen werden, sondern es soll darüber hinaus auf andere Sicherungsarten wie z.B. Verzurren verzichtet werden.

Aus der EP-A- 0 856 450 ist ein Eisenbahngüterwagen mit seitlichen Ladegutsicherungen bekannt, die durch beidseitig in Wagenlängsrichtung nebeneinonder ungeordnete und in Querrichtung auf dem Wogenboden verschieb- und in Sicherungsstellung arretierbare Sicherungsleisten gebildet sind. Jede Sicherungsleiste weist an ihren Ende je einen Führungsbolzen auf, an dem quer zur Längsachse befestigter Zylinderabschnitt als Aushebesicherung dient. Der Führungsbolzen ist in einer in Wagenquerrichtung angeordneten Führungsschiene gefuhrt, an deren Rand ein seitliches Lochraster angebracht ist. Zur Festlegung der Sicherungsleiste auf dem Wagenboden in Querrichtung dient eine an der Sicherungsleiste befestigte Verriegelungseinrichtung mit Handhebel und einem mit diesem verbundenen Verriegelungsklotz, der nach Niederdrücken des Handhebels in ein Raster des Lochraster greift. Durch die Fuhrung der Sicherungsleisten durch einfache Bolzen sind die Sicherungsleisten relativ unpräzise geführt und Neigen bei Schrägstellung zum Verklemmen. Auch die Arretierung der Sicherungsleisten kann zweckmäßiger gestaltet werden.

Aus der DE 197 51 938 A1 ist eine Vorrichtung zur Sicherung von Ladungen auf der Ladefläche von Fahrzeugen gegen auftretende Transportbeanspruchungen bekannt, die vorzugsweise zum Schutz vor Querverlagerungen von Ladegütern auf Eisenbahnfahrzeugen dienen soll. Diese Vorrichtung besteht im wesentlichen aus zwei U-Eisen, die über Gestänge miteinander verbunden sind und deren Abstand variabel ist, wobei die gesamte Vorrichtung im Güterwagenboden versenkt werden kann. Zur Ladungssicherung wird die Vorrichtung aus dem Wagenboden angehoben, das kleinere U-Eisen herausgeschoben und der Ladung angepaßt. Danach kann durch einen Arretierungshebel mit Zapfen das Gestänge und damit die Vorrichtung ver- oder entriegelt werden. Das größere U-Eisen ist formschlüssig mit dem Wagen verbunden, so daß vom Ladegut resultierende Querkräfte zunächst auf das kleinere U-Eisen und dann über die Verbindungsstangen auf das große U-Eisen und von dort in den Wagen übertragen werden. Nachteilig ist bei dieser Lösung vor allem das mit einem erheblichen Kraftaufwand verbundene Verschieben des kleineren U-Eisens in die Ladungssicherungs- bzw. Ausgangsposition. Darüber hinaus ist ein solcher Gestängemechanismus grundsätzlich störungsanfällig.

Neben der beschriebenen Vorrichtung zum Schutz gegen Querverschiebungen des Ladegutes bietet der Stand der Technik zwar eine große Anzahl von Ladungssicherungsmaßnahmen verschiedenster Art, jedoch sind diese für den beabsichtigten Zweck einer zuverlässigen Verhinderung eines seitlichen Verrutschens nicht einsetzbar. Dies betrifft insbesondere auch die bekannten Vorrichtungen zur Sicherung des Ladegutes in Längsrichtung. Eine solche Lösung wird in der DE 33 21 426 C2 beschrieben. Sie besteht aus zwischen den Stückgütern auf in Wagenlängsrichtung auf dem Boden des Güterwagens angeordneten Schienen verschiebbaren starren Zwischenwänden und einer zangenförmig ausgebildeten Festlegeeinrichtung, die das Stückgut auch bei erheblichen Krafteinwirkungen gegen Längsverschiebung sichern soll. Eine andere Lösung zur Sicherung gegen Längsverschiebungen zeigt die DE 197 33 070 A1 mit zwischen den Ladegutstapeln angeordneten Zwischenwänden, die über Führungseinrichtungen im Dachbereich längsverfahrbar aufgehängt sind und oben und unten mittels Rastelementen über eine zentrale Betätigungseinrichtung festlegbar sind. Auf Grund des unterschiedlichen Anforderungsprofils an Ladegutsicherungen gegen Querverschiebungen sind diese Lösungen hier nicht anwendbar. Im weiteren Sinne trifft dies auch auf die zahlreichen bekannten Verriegelungseinrichtungen zur Längs- und Querfestlegung von Containern, Wechselbehältern und anderen Ladebehältern zu, so daß diese hier nicht näher dargestellt werden sollen.

Der Erfindung liegt die Aufgabe zugrunde, eine einfache, leicht und schnell handhabbare Vorrichtung zu schaffen, die unter Vermeidung der aus dem Stand der Technik bekannten Nachteile das Ladegut zuverlässig gegen Querverschub sichert. Erfindungsgemäß wird dies durch die Merkmale des Anspruches 1 gelöst. Vorteilhafte Ausgestaltungen ergeben sich aus den weiteren Ansprüchen. Im folgenden wird ein Ausführungsbeispiel der Erfindung beschrieben. In der zugehörigen Zeichnung zeigen
- Fig. 1: eine schematische Darstellung der Anordnung auf einem Güterwagen,
- Fig. 2: eine Komponente der Ladegutsicherung mit einem Schnitt durch die Führungsschienen im Bereich des Führungsschlittens,
- Fig. 3: einen Schnitt durch eine der Führungsschienen mit Führungsschlitten und abgesenkter Sicherungsleiste,
- Fig. 4: einen gleichen Schnitt mit der Sicherungsleiste in der äußersten Sicherungsstellung,
- Fig. 5: eine vergrößerte Darstellung des Führungsschlittens, der Sicherungsleiste und des Schwenkarmes in der Position gemäß Fig. 4.

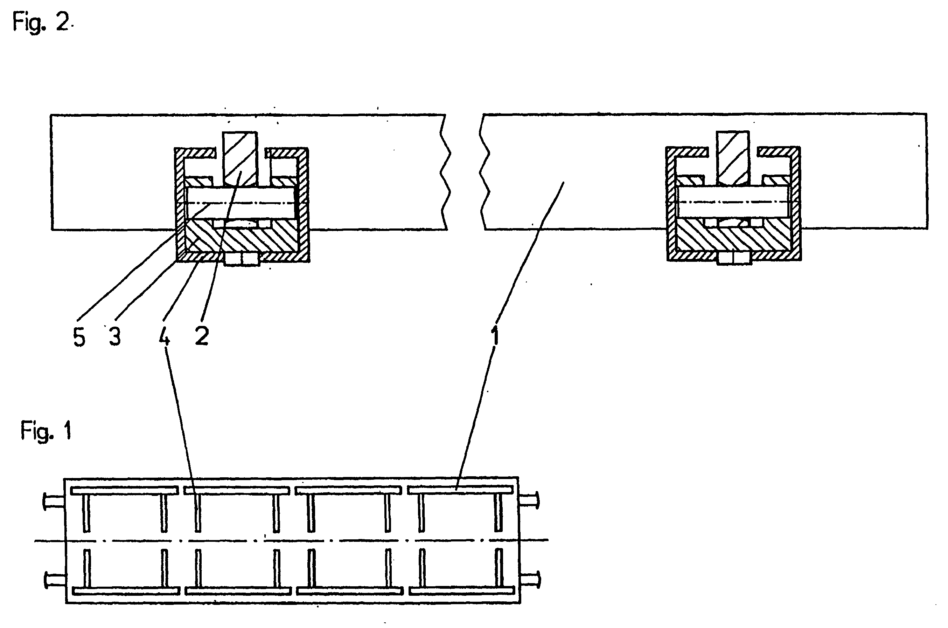

Wie in Fig. 1 dargestellt, sind auf jeder Wagenseite eines Güterwagens parallel zur Wagenlängsachse mehrere einzelne Komponenten der seitlichen Ladegutsicherung hintereinander angeordnet. Für jede Sicherungsleiste 1 sind jeweils zwei Führungsschienen 4 vorgesehen.

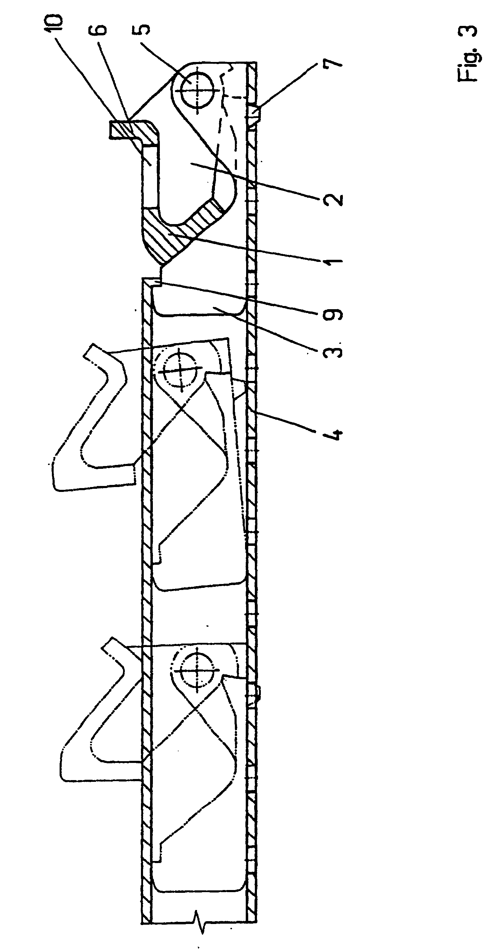

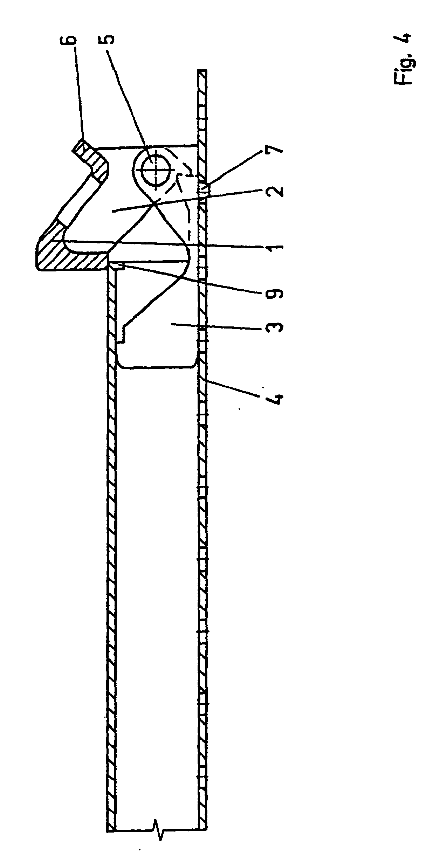

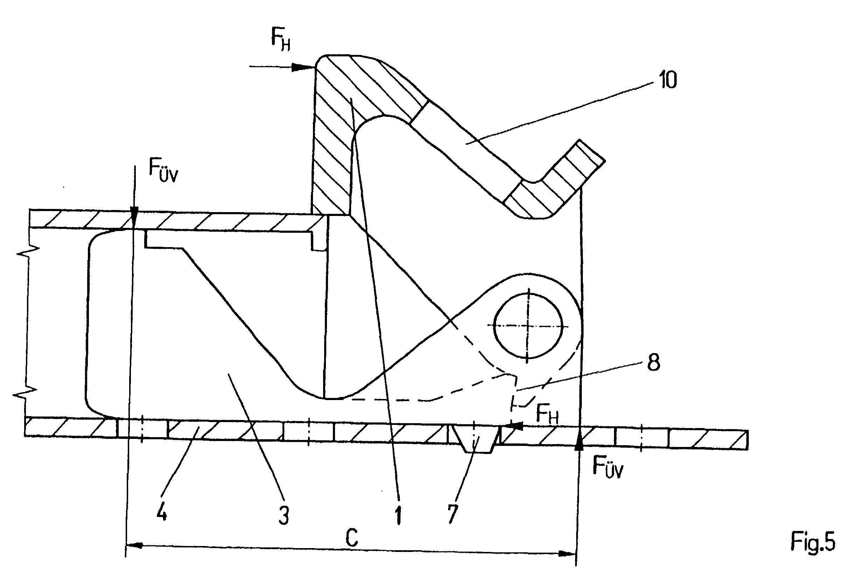

Wie aus Fig. 2 ersichtlich, sind die Führungsschienen 4 unterhalb der Wagenbodenebene angeordnet und bilden die Führung für die Führungsschlitten 3. Die Sicherungsleiste 1 ist mit Schwenkarmen 2 fest verbunden, die wiederum über Bolzen 5 an den Führungsschlitten 3 gelagert sind. Wie der Querschnitt durch die rechte Schiene und den Führungsschlitten in Fig. 2 zeigt, greifen die Schwenkarme 2 in Längsschlitze der Führungsschienen 4 ein. Die Fig. 3 und 4 zeigen die Ausbildung und Anordnung der seitlichen Ladegutsicherung auf einem Planenhaubenwagen, dessen Planendachlaufwerk rechts im Bild erkennbar ist. Die unterhalb der Fußbodenebene angeordneten Führungsschienen 4 sind mit den Längsträgern des Wagens verbunden. Die Führungsschlitten 3 weisen an ihrer Unterseite Nocken 7 auf, über die die Horizontalkräfte in die Struktur des Wagens übertragen werden. Hierfür ist auf dem Führungsschienenrücken eine Lochrasterung vorgesehen. Aus Fig. 3 ist erkennbar, daß die Geometrie derart gestaltet ist, daß die Sicherungsleiste 1 im abgeklappten Zustand eine Ebene mit dem übrigen Fußboden bildet und selbst beladen und überfahren werden kann. Durch Anheben der Sicherungsleiste 1 und leichten Druck auf dieselbe kann sie verschoben werden. Sie liegt dann auf dem eigentlichen Fußboden auf. Die äußerste Sicherungsstellung in dieser hochgeklappten Position zeigen die Fig. 4 und 5. Greifen in der jeweiligen Sicherungsstellung Horizontalkräfte F_{H} an der Sicherungsleiste an, werden diese über den Drehanschlag 8 auf den Führungsschlitten 2 übertragen. Der Schlitten 2 wird durch das vertikale Kräftepaar F_{FüV} und - F_{FüV} sowie durch die durch den Nocken 7 zu übertragende Horizontalkraft -F_{H} im Gleichgewicht gehalten. Je größer der Hebelarm c des Kräftepaares F_{FüV} ist, desto niedriger ist die Belastung auf der Führungsschiene. Um beim Verschieben der Vorrichtung ein Verkanten zu vermeiden, ist ausreichend Luft zwischen dem Längsschlitz der Führungsschiene 4 und dem Schwenkarm vorgesehen. Diese Luft befindet sich auch zwischen dem Schwenkarm 2 und den Lageraugen des Führungsschlittens 3. Damit die Sicherungseinrichtung nicht verloren gehen kann, ist sie mit einer Verliersicherung 9 ausgestattet. Zur Erreichung eines guten Handlings besitzt die Sicherungsleiste 1 Grifflöcher 10.

### Bezugszeichenliste

- 1: Sicherungsleiste
- 2: Schwenkarm
- 3: Führungsschlitten
- 4: Führungsschiene
- 5: Bolzen
- 6: Begrenzungsbord
- 7: Nocken
- 8: Drehanschlag
- 9: Verliersicherung
- 10: Grifflöcher

## Patentansprüche

1. Transportfahrzeug, insbesondere Eisenbahngüterwagen, mit seitlicher Ladegutsicherung, die durch beidseitig in Wagenlängsrichtung nebeneinonder angeordnete und in Querrichtung auf dem Wagenboden verschieb- und in Sicherungsstellung arretierbare Sicherungsleisten (1) gebildet ist, welche mittels Schwenkarme (2) aus der äußersten Sicherungsstellung mindestens in eine mit dem Wagenboden eine Ebene bildende Stellung schwenk- oder absenkbar sind, wobei für jede Sicherungsleiste (1) zwei quer zur Wagenlängsrichtung verlaufende Führungsschienen (4) unterhalb der Wagenbodenebene mit in diesen verschiebbaren Führungselementen vorgesehen sind, wobei die Sicherungsleisten (1) über die Schwenkarme (2), die in Längsschlitze der Führungsschiene (4) in der Wagenbodenebene eingreifen, mit ihren Führungselementen verbunden sind, **dadurch gekennzeichnet, dass** die Führungselemente als Führungsschlitten (3) ausgebildet sind, dass die Sicherungsleiste (1) mittels je einem in den beiden zugeordneten Führungsschienen (4) eingelassenen Führungsschlitten (3) geführt sind und dass die Führungsschlitten (3) in der jeweiligen Sicherungsstellung arretierbar sind.

2. Transportfahrzeug nach Anspruch 1, **dadurch gekennzeichnet, dass** die Sicherungsleisten (1) mit den Schwenkarmen (2) fest verbunden und die Schwenkarme (2) mittels Bolzen (5) in den Führungsschlitten (3) gelagert sind.

3. Transportfahrzeug noch Anspruch 1 oder 2, **dadurch gekennzeichnet, dass** zur Arretierung der Sicherungsleiste (1) in der gewünschten Position und zur Übertragung der auf die Sicherungsleiste (1) wirkenden Horizontalkräfte in die Struktur des Wagens die Führungsschlitten (3) einen noch unten gerichteten Nocken (7) aufweisen, für dessen Eingriff auf dem Führungsschienenrücken eine Lochrasterung vorgesehen ist.

4. Transportfahrzeug nach einem der Ansprüchen 1 bis 3, **dadurch gekennzeichnet, dass** zur Übertragung von auf die Sicherungsleiste (1) wirkenden Horizontalkräften in den Führungsschlitten (3) zwischen diesem und dem Schwenkarm (2) ein Drehanschlag (8) vorgesehen ist.

5. Transportfahrzeug nach Anspruch 3 oder 4, **dadurch gekennzeichnet, dass** der Führungsschlitten (3) an seinem zur Wagenmitte gerichteten Endbereich eine die Führung in der Führungsschiene (4) und die Aufnahme von Vertikalkräften sichernde Formgestaltung und an dem entgegengesetzten Endbereich die Lagerung für den Schwenkarm (2) und unterhalb derselben den Nocken (7) des Führungsschlitten (3) aufweist und dass in der äußersten Endstellung die Sicherungsleiste (1) in den mittleren Führungsschlittenbereich einschwenkbar ist.

6. Transportfahrzeug nach Anspruch 1, **dadurch gekennzeichnet, dass** die Sicherungsleiste (1) derart ausgebildet ist, doss sie nach dem Einschwenken bzw. Absenken mit dem Wagenboden eine Ebene bildet und am äußersten Ende einen Begrenzungsbord (6) für das Ladegut aufweist.

## Claims

1. Transport vehicle, in particular railway goods wagon, with a lateral load securing system which is formed by securing strips (1) which are arranged next to one another in the longitudinal direction of the wagon on both sides and displaceable on the floor of the wagon in the transverse direction and lockable in the securing position, and can be pivoted or lowered by means of pivot arms (2) from the outermost securing position at least into a position forming a plane with the floor of the wagon, each securing strip (1) being provided with two guide rails (4) running transversely to the longitudinal direction of the wagon underneath the plane of the floor of the wagon with guide elements displaceable in these, the securing strips (1) being connected with their guide elements through the pivot arms (2) which engage in longitudinal slots in the guide rail (4) in the plane of the floor of the wagon, **characterised in that** the guide elements take the form of guide slides (3), **in that** the securing strips (1) are guided by means of a guide slide (3) recessed in the two associated guide rails (4) and **in that** the guide slides (3) are lockable in the respective securing position.

2. Transport vehicle according to claim 1, **characterised in that** the securing strips (1) are connected securely to the pivot arms (2), and the pivot arms (2) are mounted in the guide slides (3) by means of pins (5).

3. Transport vehicle according to claim 1 or 2, **characterised in that** for locking the securing strip (1) in the desired position and transmitting the horizontal forces acting on the securing strip (1) into the structure of the wagon, the guide slides (3) exhibit a downwardly directed cam (7) for whose engagement a series of holes is provided on the back of the guide rail.

4. Transport vehicle according to one of claims 1 to 3, **characterised in that** a pivoting stop (8) is provided in the guide slides (3) between the latter and the pivot arm (2) for transmission of horizontal forces acting on the securing strip (1).

5. Transport vehicle according to claim 3 or 4, **characterised in that** in its end area facing the middle of the wagon the guide slide (3) exhibits a shape ensuring guidance in the guide rail (4) and reception of vertical forces, and in the opposite end area it exhibits the mounting for the pivot arm (2) and underneath this the cam (7) of the guide slide (3), and **in that** in the outermost end position the securing strip (1) can be pivoted into the middle guide slide area.

6. Transport vehicle according to claim 1, **characterised in that** the securing strip (1) is embodied such that after pivoting or lowering it forms a plane with the floor of the wagon and at the outermost end exhibits a boundary edge (6) for the load.

## Revendications

1. Véhicule de transport, en particulier wagon à marchandises, avec une protection latérale du chargement formée par des barres de protection (1) qui sont disposées des deux côtés, les unes à côté des autres, dans le sens longitudinal du wagon, qui sont mobiles dans le sens transversal sur le plancher du wagon et aptes à être arrêtées en position de blocage, et qui sont aptes à pivoter ou à être abaissées à l'aide de bras pivotants (2) pour passer de la position de blocage extérieure à au moins une position qui définit un plan avec le plancher du wagon, étant précisé qu'il est prévu pour chaque barre de protection (1) deux rails de guidage (4) qui s'étendent transversalement par rapport au sens longitudinal du wagon, au-dessous du plan du plancher du wagon, et qui comportent des éléments de guidage mobiles dans lesdits rails (4), et que les barres de protection (1) sont reliées à leurs éléments de guidage grâce aux bras pivotants (2), qui pénètrent dans des fentes longitudinales des rails de guidage (4) dans le plan du plancher du wagon, **caractérisé en ce que** les éléments de guidage sont conçus comme des chariots de guidage (3), **en ce que** les barres de protection (1) sont guidées chacune à l'aide d'un chariot de guidage (3) qui est introduit dans le rail de guidage (4) associé, et **en ce que** les chariots de guidage (3) sont aptes à être arrêtés dans la position de blocage respective.

2. Véhicule de transport selon la revendication 1, **caractérisé en ce que** les barres de protection (1) sont reliées solidement aux bras pivotants (2) et les bras pivotants (2) sont montés dans les chariots de guidage (3) à l'aide de goujons (5).

3. Véhicule de transport selon la revendication 1 ou 2, **caractérisé en ce que** pour arrêter la barre de protection (1) dans la position voulue et pour transmettre les forces horizontales agissant sur ladite barre de protection (1) à la structure du wagon, les chariots de guidage (3) comportent une saillie (7) dirigée vers le bas pour la pénétration de laquelle une perforation est prévue sur l'arrière des rails de guidage.

4. Véhicule de transport selon l'une des revendications 1 à 3, **caractérisé en ce que** pour la transmission de forces horizontales agissant sur la barre de protection (1) au chariot de guidage (3), il est prévu entre celui-ci et le bras pivotant (2) une butée rotative (8).

5. Véhicule de transport selon la revendication 3 ou 4, **caractérisé en ce que** le chariot de guidage (3) présente dans sa zone d'extrémité dirigée vers le milieu du wagon une forme qui garantit le guidage dans le rail de guidage (4) et la réception de forces verticales, et dans la zone d'extrémité opposée le montage pour le bras pivotant (2) et, au-dessous de ce montage, la saillie (7) du chariot de guidage (3), et **en ce que** dans la position de fin de course extérieure, la barre de protection (1) est apte à pivoter pour venir dans la zone de chariot de guidage centrale.

6. Véhicule de transport selon la revendication 1, **caractérisé en ce que** la barre de protection (1) est conçue de telle sorte qu'après son pivotement ou son abaissement, elle forme un plan avec le plancher de wagon et elle présente à son extrémité extérieure un bord de limitation (6) pour le chargement.
